# EUROPEAN PATENT SPECIFICATION

(11) **EP 4 353 079 B1**
(45) Date of publication and mention of the grant of the patent: **17.09.2025**
(21) Application number: 23806792.0
(22) Date of filing: 11.05.2023
(51) Int. Cl.: A01K 61/10, A01K 61/60, A01K 61/80, A01K 79/00, B63B 35/26

(54) **CATAMARAN WORKBOAT-BASED DEEP-SEA AQUACULTURE METHOD**
AUF KATAMARANARBEITSBOOT BASIERENDES TIEFSEE-AQUAKULTURVERFAHREN
PROCÉDÉ D'AQUACULTURE EN HAUTE MER BASÉ SUR UN BATEAU DE TRAVAIL DE TYPE CATAMARAN

(30) Priority: 20.05.2022 CN 202210558260
(43) Date of publication of application: 17.04.2024
(73) Proprietor: Qingdao Blue Granary Marine Fishery Development Co., Ltd., Qingdao, Shandong 266000 (CN); Qingdao Blue Granary Marine Engineering Technology Co., Ltd., Qingdao, Shandong 266000 (CN)
(72) Inventor: LEI, Dong, Qingdao, Shandong 266000 (CN)
(74) Representative: Bayramoglu et al.
(86) International application number: PCT/CN2023/093361
(87) International publication number: WO 2023/221840

(56) References cited:
- EP-B1- 2 846 630
- WO-A1-2019/221607
- CN-A- 109 463 322
- CN-A- 112 021 240
- CN-A- 112 021 240
- CN-A- 112 219 764
- CN-A- 113 841 644
- CN-A- 114 747 517
- CN-A- 114 847 205
- CN-U- 211 558 472
- JP-A- H09 256 349

## Description

### BACKGROUND OF THE INVENTION

### 1. Technical Field

The invention relates to a method for implementing aquaculture in deep-sea and far-sea areas, belonging to the fields of aquaculture and marine engineering.

### 2. Description of Related Art

With the continuous development of large-scale deep-sea and far-sea aquaculture facilities and technology, especially the increasing application of aquaculture vessels in the deep-sea and far-sea aquaculture industry, there is a prominent emphasis on optimizing ship design, increasing the water volume of the vessels, enhancing the level of automation and aquaculture efficiency, as well as reducing aquaculture costs, among various directions for industry development.

Currently, hull structures of existing large-scale aquaculture vessels generally follow a traditional bulk carrier design and adopt a closed tank aquaculture mode, which leads to high unit aquaculture water costs and aquaculture expenses. To reduce costs and aquaculture expenses, a common method is to use net cages, but net cage aquaculture has the disadvantage of poor maneuverability.

For example, CN112021240A provides a dual-hull mobile aquaculture vessel, where a first hull and a second hull are arranged opposite to each other on the sides of the vessel to provide primary buoyancy, and several lifting-type net cages are positioned between the first hull and the second hull and connected to both hulls. Closed-loop factory culture of small fish is conducted in the two hulls, and wild culture of large-size adult fish is successively conducted in the lifting-type net cages. This application integrates closed and open type culture methods to achieve marine wild culture from small fry to adult fish, thus reducing the environmental pressure of land or nearshore net cage culture and lowering the cost of transporting large-size fish at sea. Compared to fully closed culture, this application uses low-density open type wild culture in the later stages of the culture process.

However, the aforementioned prior art of using the two-stage aquaculture vessel and aquaculture process, where small fry are placed in the closed first and second hulls for aquaculture and larger-sized fish are cultured in the lifting-type net cages between the two hulls, has the following drawbacks and limitations. Firstly, during the sorting of aquaculture fish and the harvesting of adult fish, there are difficulties in directing the transfer of fish between the hulls and the net cages. The use of traditional fish suction pump devices can cause significant damage to larger-sized fish, resulting in a diminished visual appeal and reduced product quality of the fish. Secondly, the choice of feeding systems has always been a key technical difficulty in deep-sea and far-sea aquaculture, but the aforementioned prior art does not provide a clear and comprehensive solution. Thirdly, the fixed connection of the net cages creates significant water resistance during the traveling of the dual-hull vessel, thus increasing the energy consumption for vessel transportation. Additionally, in adverse weather and sea conditions, it is more susceptible to causing fish mortality or disease within the net cages.

In view of this, the present application is proposed.

### BRIEF SUMMARY OF THE INVENTION

The present invention discloses a deep-sea and far-sea dual-hull vessel aquaculture method as presented in the appended claims to solve the problems in the prior art, which uses a novel dual-hull vessel with immersed vertical lifting-type culture tanks and a top movable feeding system. By utilizing a transfer system between a cabin of the dual-hull vessel and the culture tanks, along with a water level differential control method, the transport and transfer flexibility is enhanced for deep-sea and far-sea aquaculture, the cost of vessel-based aquaculture is effectively reduced, and net cages have mobility and the capability to leave the water surface.

In conclusion, the deep-sea and far-sea dual-hull vessel aquaculture method has the following advantages.
1. This application realizes a system and method for immersed deep-sea and far-sea aquaculture of many kinds of fish outside the hull. An improved open type culture mode making full use of the deep-sea and far-sea water environment is proposed, truly achieving aquaculture from small fry to adult fish in the wild sea environment.
2. Compared with the prior art where open type net cage aquaculture is only adopted for larger fish in the later stages, this application adopts low-density open type wild aquaculture throughout the entire culture cycle, significantly improving the quality of aquaculture products and realizing higher economic value.
3. Based on the transfer system and water level difference control between the dual-hull vessel and the culture tanks, more precise entry and exit control and size sorting operations are achieved. This is beneficial for the protection of larger fish and improving the survival rate, while also enhancing the quality of aquaculture products.
4. The vessel-mounted gantry crane is used for feeding control, realizing mixed culture of various aquatic organisms, and improving the refinement of aquaculture techniques and production yield.
5. The vessel-mounted gantry crane is used to control the movement and lifting of the immersed culture tanks. By extending or retracting the culture tanks and lifting the culture tanks to the deck and/or the front of the hull, the culture tanks can be separated from the water surface for easy transport and maintenance of the dual-hull vessel, which helps reduce water resistance encountered during the traveling of the dual-hull vessel, protects the culture tanks, and facilitates culture tank maintenance.
6. The design proposed in this application significantly improves the level of intelligence and automation in the feeding, harvesting, sorting, and cleaning stages of deep-sea and far-sea aquaculture.

### BRIEF DESCRIPTION OF THE SEVERAL VIEWS OF THE DRAWINGS

The scheme of this application will be further explained below with reference to the attached drawings.
Fig. 1 is a structural diagram of a deep-sea and far-sea aquaculture dual-hull vessel according to this application;
Fig. 2 is an enlarged view of part A in Fig. 1;
Fig. 3 is an enlarged view of part B in Fig. 1;
Fig. 4 is a front view of a hull structure shown in Fig. 1;
Fig. 5 is an enlarged view of part C in Fig. 4;
Fig. 6 is an enlarged view of part D in Fig. 4;
Fig. 7 is a side view of a hull structure shown in Fig. 1;
Fig. 8 is a structural diagram of a feed bin;
Fig. 9 is an isometric view of part of a hull shown in Fig. 1;
Fig. 10 is an enlarged view of part E in Fig. 9;
Fig. 11 is an enlarged view of part F in Fig. 9;
Fig. 12 is a diagram showing that a culture tank is moved to the front of a hull;
Fig. 13 is an enlarged view of part G in Fig. 12;
Fig. 14 is a top view of part G in Fig. 12;
Fig. 15 is an enlarged view of part H in Fig. 13;
Fig. 16 is a structural diagram of a culture tank;
Fig. 17 is an enlarged view of part I in Fig. 16;
Fig. 18 is an enlarged view of part J in Fig. 16;
Fig. 19 is a structural diagram of a lifting component;
Fig. 20 is an enlarged view of part K in Fig. 19; and
Fig. 21 is a structural diagram of a first fish driving frame.

In the above drawings, W1 points to the horizontal plane, W2 points to the preset high water level inside the cabin, and W3 points to the preset low water level inside the cabin.

### DETAILED DESCRIPTION OF THE INVENTION

In Embodiment 1, a deep-sea and far-sea dual-hull vessel aquaculture method provided by this application realizes immersed culture of various fish outside a hull, and full-cycle culture from small fry to harvesting is conducted using the natural wild water environment in deep-sea and far-sea areas.

At the same time, the transfer between the hull and a culture tank can be adjusted according to a culture plan, making the transfer and loading and unloading operations between the hull and shore-based transport facilities more convenient, thus realizing dynamic and refined aquaculture management.

The following technical scheme put forward in this application can be widely applied to immersed three-dimensional culture of many kinds of fish, including benthic fish.

Water circulation between a vessel cabin and the external environment can be realized by biofiltration technology. For example, the vessel cabin intakes water from outside the hull and inject it to form a directional circulating water flow under the control of an internal circulation device. Eventually, water is discharged through a drainage pipe to the outside of the hull to achieve the circulation and purification of seawater inside and outside the cabin.

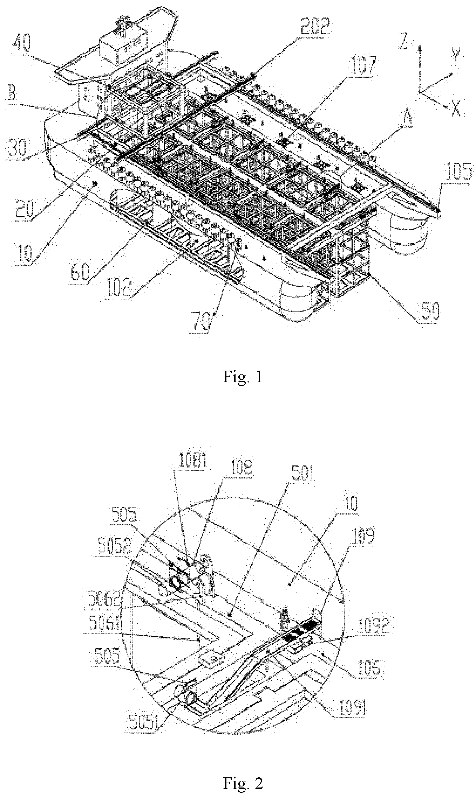

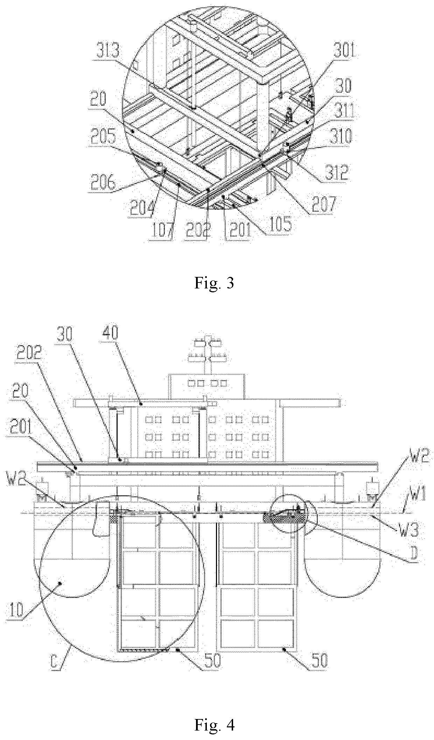

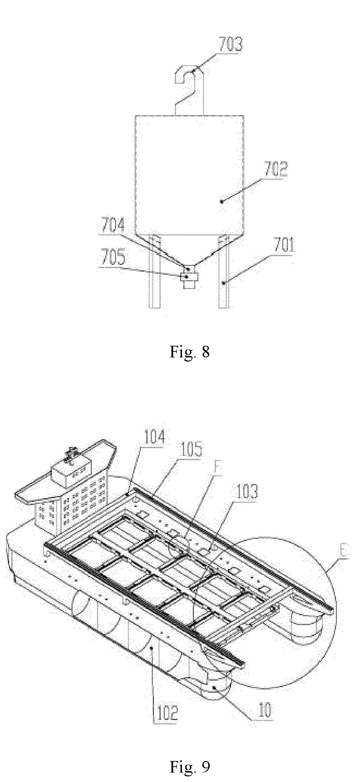

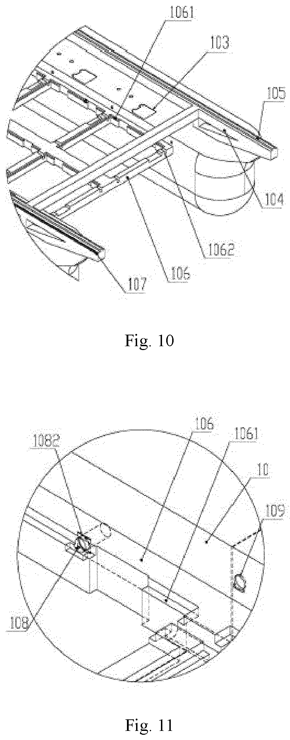

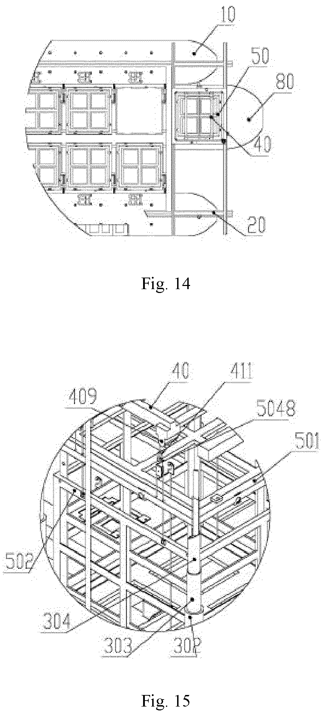

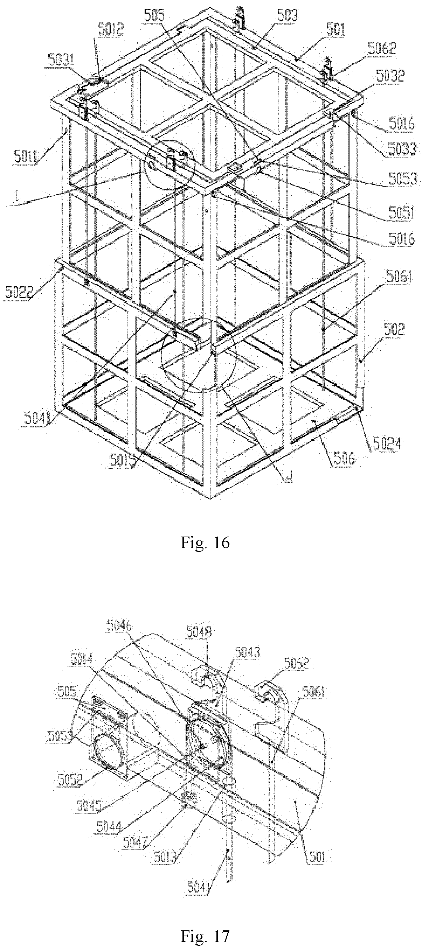

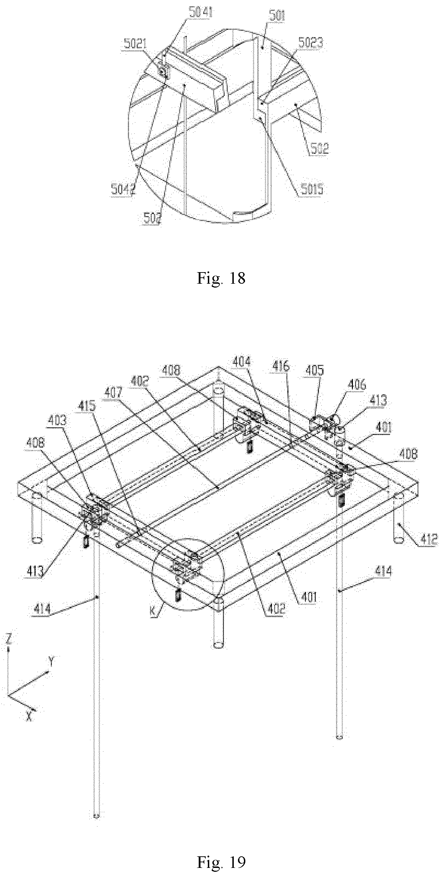

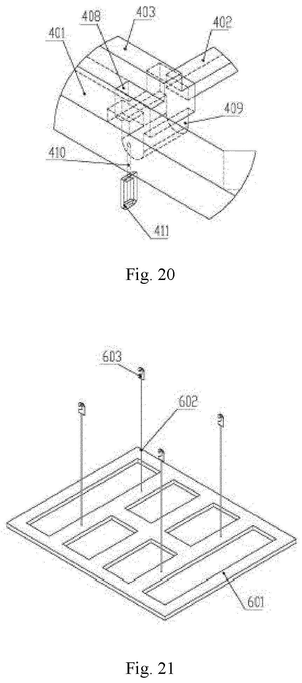

As shown in Figs. 1-21, a novel deep-sea and far-sea aquaculture dual-hull vessel comprises hull components 10 on two sides respectively, culture tanks 50 between the hull components 10, and a sorter 1091 for connecting the hull components 10 with the culture tank 50 and directionally transferring cultured fish from the hull components 10 to the culture tank 50.

A plurality of enclosed and isolated compartments 102 are provided in the hull component 10 for temporary culture and transportation during the transportation of small fry to a culture area, transportation of adult fish to the shore for sale, and transition in different sea areas as required.

The top of each compartment 102 is provided with a hatch 103 which can be closed by a compartment cover 107;
a longitudinal guide rail 105 is arranged at the top of the hull component 10 on each side, which is fixedly connected with the hull component through a frame 104, and a first rack 107 is provided along the side of the longitudinal guide rail 105; and
a partition frame 106 is arranged between the tops of the hull components 10 on two sides, the partition frame 106 has a plurality of evenly distributed upward-opening notches 1061, and a plurality of slots 1062 are formed in the partition frame 106.

A side, facing the culture tank 50, of the hull component 10 is provided with two rows of openings arranged vertically, the higher row of openings is located above a waterline of the hull, to form cabin fish outlets 109, the lower row of openings is located below the waterline of the hull, to form cabin fish inlets 108, and both the cabin fish outlet 109 and the cabin fish inlet 108 penetrate through the partition frame 106.

The cabin fish outlet 109 and the cabin fish inlet 108 are closed at ordinary times and opened for use when transferring fish. For example, the partition frame 106 is provided with a first sealing groove 1082, and a first sealing door 1081 is inserted into the first sealing groove 1082 at ordinary times to close the cabin fish inlet 108 which is located above W3 but below W1. Accordingly, the cabin fish outlet 109 is arranged at W2 which is higher than W1.

Fish collecting devices are arranged at the bottom of the compartment 102 of the hull component 10 and the bottom of the culture tank 50, so as to drive the cultured fish to their respective fish outlets. The fish collecting device comprises a first fish driving frame 60 and a second fish driving frame 506.

A plurality of feed bins 70 are arranged on a top deck of the hull component 10, and feeds required for aquaculture are stored in the feed bins 70. The feed bin 70 is composed of a bracket 701, a bin body 702, a hook 703, a discharge port 704 and a valve 705. The discharge port 704 is arranged at the bottom of the bin body 702 and controlled by the valve 705 to be opened and closed.

A mobile lifting mechanism, such as a gantry crane, is arranged between the tops of the hull components 10 on two sides. The mobile lifting mechanism comprises a lifting component 40, and a longitudinal moving component 20 and a transverse moving component 30 distributed along the hulls on two sides. The longitudinal moving component 20 has an H-shaped frame bottom structure, and two transverse guide rails 202 are fixedly connected to the H-shaped frame bottom structure.

The mobile lifting mechanism is used to lift the feed bins 70 placed on the hulls on two sides. During the traveling along the H-shaped frame, the valve of the feed bin is opened to dispense feeds to the culture tank 50 below along a traveling track of the gantry crane.

The longitudinal moving component 20 is provided with a first motor 205 fixedly connected to the longitudinal moving component 20 through a first motor mounting plate 204, a first guide groove 201 at the bottom, and a second rack 207 fixedly connected to the side. A first gear 206 is in driving connection with an output shaft of the first motor 205, the first gear 206 meshes with the first rack 107, and the first guide groove 201 is slidably connected with the longitudinal guide rail 105. Driven by the first motor 205, the longitudinal moving component 20 can move back and forth in an X-axis direction.

The transverse moving component 30 is provided with a second motor 311, a plurality of groups of vertically arranged first guide sleeves 302, and a second guide groove 301 at the bottom. The first guide sleeve 302 is vertically connected to the lifting component 40 above, the second guide groove 301 is slidably connected to the transverse guide rail 202 of the longitudinal moving component 20, the second motor 311 is fixedly connected to a lower part of the transverse moving component 30 through a second motor mounting plate 310, the second gear 312 is in driving connection with an output shaft of the second motor 311, and the second gear 312 meshes with the second rack 207. Driven by the second motor 311, the traverse moving component 30 can move back and forth in a Y-axis direction.

The lifting component 40 comprises a lifting frame 401, a plurality of groups of guide columns 412 are arranged at the bottom of the lifting frame 401, and two groups of guide rods 402 are fixedly connected inside the lifting frame 401. Two ends of a left slide bar 403 and a right slide bar 404 are each fixedly connected with a sliding sleeve 408, and the sliding sleeves 408 are slidably connected with the guide rods 402. The left slide bar 403 is provided with a left-handed thread 415, and the right slide bar 404 is provided with a right-handed thread 416.

A third motor 406 is connected to the side of the lifting frame 401 through a U-shaped plate 405, and a bidirectional screw 407 is fixedly connected with an output shaft of the third motor 406. The bidirectional screw 407 penetrates through the left slide bar 403 and the right slide bar 404 in a threaded connection manner, that is, two ends of the bidirectional screw 407 are symmetrically provided with a right-handed thread and a left-handed thread respectively. Driven by the third motor 406, the left slide bar 403 and the right slide bar 404 slide toward or away from each other in the lifting frame 401 along the Y-axis direction, so as to change the distance therebetween.

An electric hoist 409 is connected to each sliding sleeve 408, and the electric hoist 409 is connected with a pulling plate 411 below through a first steel cable 410.

A plurality of fourth motors 413 are connected to the lifting frame 401, output shafts of the fourth motors 413 are fixedly connected with a lifting screw 414, and the lifting screw 414 is threadedly connected with a lifting nut 313 of the transverse moving component 30.

A first telescopic rod 303, a second telescopic rod 304 and a third telescopic rod 305 are sequentially nested and slidably connected along an axial center line of the first guide sleeve 302, and the top of the third telescopic rod 305 is connected with the guide column 412. Driven by the fourth motors 413, the first telescopic rod 303, the second telescopic rod 304 and the third telescopic rod 305 sequentially expand and contract synchronously, so that the vertical height of the lifting component 40 can be adjusted.

The culture tank 50 is located between the hull components 10 on two sides in a suspended connection manner for daily culture. That is, when the dual-hull vessel travels to a deep-sea and far-sea aquaculture area, the small fry or the temporarily cultured adult fish inside the hull are transferred to the culture tank 50 for immersed culture in the natural wild environment outside the hull. Adult fish are transferred from the culture tank 50 to the interior of the compartment 102 of the hull component 10, and returned to the shore by the dual-hull vessel for unloading and sale.

The sides of the culture tank 50 facing the hulls on two sides are provided with culture tank fish inlets and culture tank fish outlets, thus forming connecting channels with hull fish inlets and outlets. The culture tank fish inlets and outlets are flush with the waterline of the hull, and are closed at ordinary times and opened for use when transferring fish.

The deep-sea and far-sea aquaculture mentioned in this application belongs to immersed aquaculture. In order to increase the volume of aquaculture water, the culture tank needs to have a large planar capacity, such as 400 square meters. In order to reduce water resistance during the traveling of the dual-hull vessel, it is necessary to separate the culture tank 50 from the water and put it on the top of the hull. In order to prevent significant swaying when the culture tank rises above the water surface, a vertically extendable structure is provided to achieve volume reduction during non-culture periods, facilitating storage and fixation.

The culture tank 50 is composed of an upper space 501 and a lower space 502 which are linked, the top of the upper space 501 is connected with a culture tank cover 503 and a plurality of movable pulley components 504, and the bottom of the lower space 502 is provided with a second fish driving frame 506.

The upper space 501 is provided with culture tank fish inlets 5051 and culture tank fish outlets 5052, second sealing grooves 5053 are arranged at the culture tank fish inlets 5051 and the culture tank fish outlets 5052, and second sealing doors 505 close the culture tank fish inlets 5051 and the culture tank fish outlets 5052 through the second sealing grooves 5053.

The transfer of cultured fish between the compartment 102 and the culture tank 50 is realized mainly by means of the water level difference between them.

Specifically, when the cultured fish are transferred from the hull to the culture tank, the cabin fish outlets 109 communicate with the culture tank fish inlets 5051, seawater outside the vessel is injected into the hull by using equipment such as a water pump, so that the water level in the cabin is higher than the external seawater, and the first fish driving frame 60 at the bottom of the compartment 102 rises to concentrate the cultured fish at the upper part of the hull and transfer the cultured fish to the culture tank 50.

When the cultured fish are transferred from the culture tank to the hull, the cabin fish inlets 108 communicate with the culture tank fish outlets 5052, the seawater in the hull is pumped out by the water pump to make the water level in the cabin lower than the external seawater, and the second fish driving frame 506 at the bottom of the culture tank 50 rises to concentrate the cultured fish at the upper part of the culture tank 50 and transfer the cultured fish to the compartment 102.

One end of the culture tank cover 503 is hinged to a pin hole 5012 of the upper space 501 through a pin 5031, and the other end of the culture tank cover 503 is fixedly connected with a corresponding screw hole of the upper space 501 through a locking hole 5033 in a limit block 5032 fixedly connected with the culture tank cover 503, so that the culture tank cover 503 can be opened for maintenance or inspection.

The movable pulley component 504 is composed of a second steel cable 5041, a fixing plate 5042, a cable bracket 5043, a pulley 5044, a pulley shaft 5045, a cable bracket hole 5046 and a cable head 5047, and a cable hook 5048 is arranged on the cable bracket 5043. The second steel cable 5041 is wound around the pulley 5044, with one end fixedly connected to the fixing plate 5042 and the other end fixedly connected to the cable head 5047. The pulley shaft 5045 fixedly connected to the pulley 5044 is sleeved in the cable bracket hole 5046 of the cable bracket 5043, and the pulley 5044 is rotatably connected with the pulley shaft 5045. The cable head 5047 penetrates through a first hole 5014 of the upper space 501 and is fixedly connected with the upper space 501. Further, the second steel cable 5041 penetrates through a second hole 5013 while maintaining a gap from the second hole. The second steel cable 5041 is fixedly connected with a shaft pin 5021 fixedly connected to the lower space 502 through the fixing plate 5042.

An outer side wall of the upper space 501 and an inner side wall of the lower space 502 are in clearance fit, and the vertical height of the upper space 501 is greater than that of the lower space 502. The bottom of the upper space 501 is open, and the bottom of the lower space 502 is a closed frame. At the maximum extended position, an upper end face of an outer boss 5015 fixedly connected to the upper space 501 contacts and is fixedly connected to a lower end face of an inner boss 5023 of the lower space 502, thus restricting the lower space 502 from continuing to extend. When vertically shortened to the minimum height, a bottom surface of the upper space 501 is in contact with an inner bottom surface 5024 of the lower space 502, so the shortening cannot be continued. At this point, a first hole 5022 of the lower space 502 and a third hole 5011 of the upper space 501 are concentric, and can be locked together by inserting a bolt between them.

Further, when a fourth hole 5016 of the upper space 501 is fixedly connected with the slot 1062 of the hull component 10 by a bolt, the upper space 501 is relatively fixedly suspended. By pulling the cable hook 5048 upward, the lower space 502 moves upward. Based on the driving principle of a movable pulley, the moving distance of the cable hook 5048 is half that of the lower space 502, thus reducing the distance traveled by the first steel cable 410, driven by the electric hoist 409 of the lifting component 40, ultimately reducing the overall height of the lifting component 40.

The second fish driving frame 506 is arranged on an inner bottom surface 5024 of the lower space 502, a plurality of second hooks 5062 are connected to the second fish driving frame 506 through second rods 5061, and the second hooks 5062 extend out and are located above the top of the upper space 501.

Correspondingly, the first fish driving frame 60 arranged at the bottom of each compartment 102 is vertically connected with first hooks 602 above through first rods 601, and the first hooks 602 extend out and are located on the top deck of the hull component 10.

To improve the environmental quality for fish culture in the culture tank 50, and to mimic the natural water environment as closely as possible, the culture tank is a hollow frame open structure. An inner side of the upper space 501, an outer side of the lower space 502, an outer side of the culture tank cover 503, and an upper surface of the second fish driving frame 506 are all covered with fishing nets.

The sorter 1091 has one end connected to the cabin fish outlet 109 and the other end connected to the culture tank fish inlet 5051. The sorter 1091 is provided with a plurality of sorting ports 1092, and the sorted cultured fish can be transferred to different culture tanks 50, or the adult fish can be directly unloaded from the vessel.

Based on the structural design of the above-mentioned deep-sea and far-sea aquaculture dual-hull vessel, the application realizes immersed deep-sea and far-sea aquaculture of many kinds of fish outside the hull, as described below.

The natural water environment outside the vessel is used to conduct open type fish culture from small fry to adult fish in culture tanks 50;
during the traveling of the dual-hull vessel (including but not limited to transportation between an aquaculture sea area and a shore base, and temporary return to port to avoid adverse weather and sea conditions), the cultured fish are temporarily kept within a cabin component 10;
based on transfer channels and water level difference control between hull components 10 on two sides and the culture tanks 50, fish are directionally transferred or unloaded;
feed bins 70 are lifted by a mobile lifting mechanism at the top of the hull component 10, and feeds are dispensed to the culture tank 50 below during movement along an H-shaped frame;
the mobile lifting mechanism is used to lift the culture tanks 50, and the culture tanks 50 are lifted out of the water after contracting vertically; and during the traveling of the dual-hull vessel, the culture tank 50 is placed on a top deck of the hull component 10.

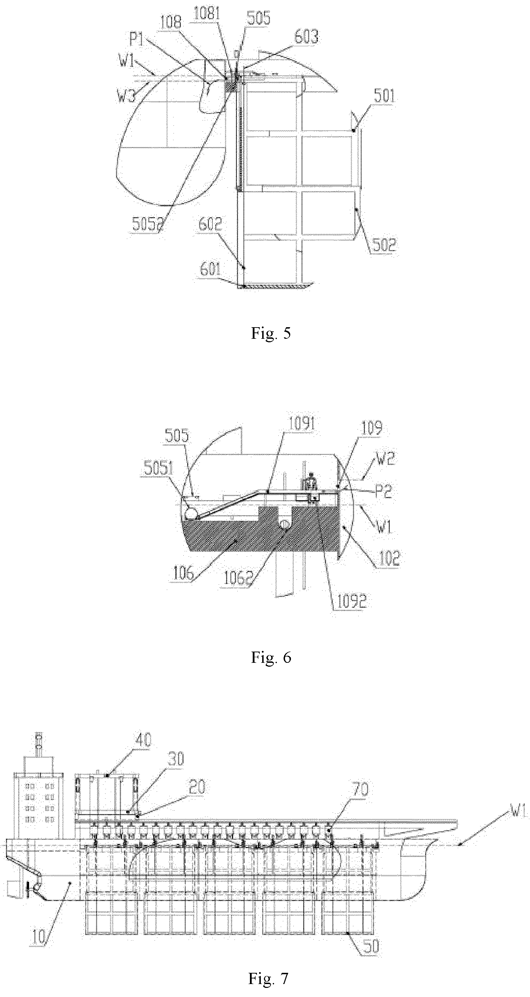

Further, in the process of transferring the cultured fish from the culture tank 50 to the hull component 10, the water level in the compartment 102 is first lowered to W3 and the water is continuously pumped out by using a water pump, then the second sealing door 505 and the first sealing door 1081 are opened, and the pulling plate 411 connected with the end of the first steel cable 410 is driven by the electric hoist 409 to hook the second hook 5062 of the second fish driving frame 506 and pull up the second fish driving frame 506, so that the cultured fish enter the compartment 102 in the direction of arrow P1 in Fig. 5, via the culture tank fish outlets 5052 and the cabin fish inlets 108.

In the process of transferring the cultured fish from the hull component 10 to the culture tank 50, the water level in the compartment 102 is first raised to W2 and the water is continuously pumped inward by using a water pump, then the second sealing door 505 is opened, and the pulling plate 411 connected with the end of the first steel cable 410 is driven by the electric hoist 409 to hook the first hook 602 of the first fish driving frame 60 and pull up the first fish driving frame 60, so that the cultured fish enter the culture tank 50 in the direction of arrow P2 in Fig. 6, via the culture tank fish inlets 5051, the cabin fish outlets 109 and the sorter 1091.

In the feeding process as described above, the mobile lifting mechanism located on the top deck of the hull components 10 on two sides lifts the feed bins 70 while traveling along the H-shaped frame formed by the longitudinal moving component 20 and the transverse moving component 30, and controls a valve 705 to open to dispense the feeds stored in the feed bins 70 into the culture tanks 50 below.

In the process of lifting the culture tank 50, based on the clearance fit between the outer side wall of the upper space 501 and the inner side wall of the lower space 502, the upper space 501 and the lower space 502 are retracted towards each other to reduce the volume of the tank until a bottom surface of the upper space 501 contacts an inner bottom surface 5024 of the lower space 502; and at this point, the first hole 5022 of the lower space 502 is concentric with the third hole 5011 of the upper space 501, and the whole culture tank 50 can be locked by inserting a bolt between them.

During the directional transfer or unloading of the cultured fish, a sorter 1091 is used to connect cabin fish outlets 109 with culture tank fish inlets 5051, and the sorted cultured fish are transferred to different culture tanks 50 through a plurality of sorting ports 1092, or adult fish are directly unloaded from the vessel.

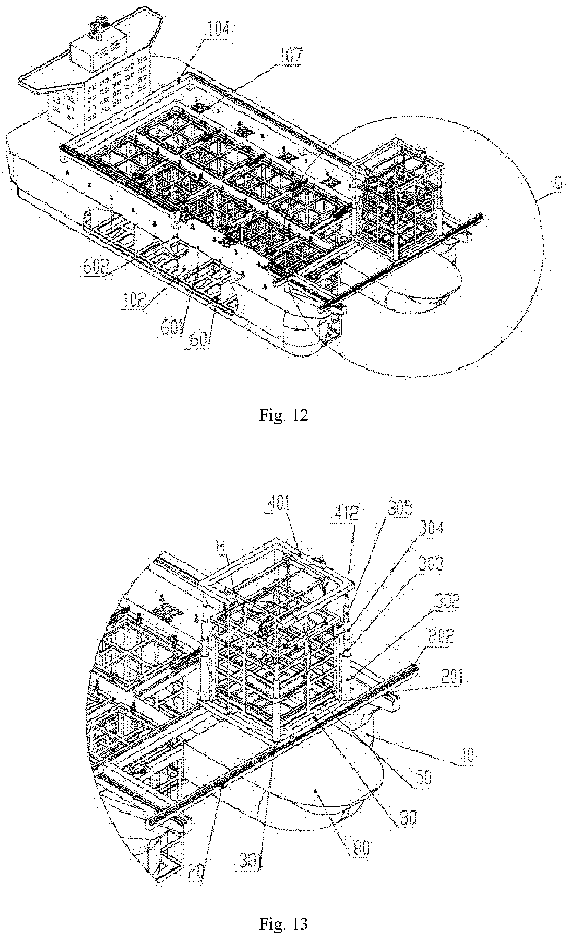

As shown in Figs. 12-15, the application provides a specific operation process of dismounting the culture tank 50 from the hull component 10:

after vertically compressing the culture tank 50 and putting it away, the culture tank 50 is dismounted from the vessel by using a maintenance boat 80 and moved to other places, such as being transported back to the shore base for maintenance or being transferred to other vessels nearby for reuse.

Specifically, driven by the electric hoist 409 of the lifting component 40, the first steel cable 410 pulls the pulling plate 411 at its end to hook the cable hook 5048 of the movable pulley component 504, so that the upper space 501 and the lower space 502 can be retracted vertically towards each other to the minimum volume; then, a plurality of fourth motors 413 simultaneously drive the lifting screw 414 and the lifting nut 313 of the transverse moving component 30 to rotate relatively to lift the entire lifting component 40 to be completely out of the water; finally, the first motor 205 and the second motor 311 are started at the same time, so that the culture tank 50 is laterally moved above the maintenance boat 80, the plurality of fourth motors 413 are driven at the same time to pull down the entire lifting component 40 until the culture tank 50 lands on the deck of the maintenance boat 80, and the pulling plate 411 is separated from the cable hook 5048; and according to the destination of maintenance or reuse, the culture tank 50 is transferred to other places by the maintenance boat 80.

The process of using the above dual-hull vessel for deep-sea and far-sea aquaculture comprises the following stages:
(1) transportation stage from shore base to deep-sea and far-sea aquaculture area
   small fry or adult fish are contained in the compartment 102; in order to facilitate the transportation of the culture tank 50 and reduce the adverse effects of the culture tank on the traveling of the vessel, such as wind resistance and water resistance, the upper space 501 and the lower space 502 of the culture tank 50 are retracted vertically towards each other to the minimum volume; and by inserting a bolt into the first hole 5022 of the lower space 502 and the third hole 5011 of the upper space 501 of the culture tank 50 to secure the upper space and the lower space, the culture tank 50 can be fixedly connected with the partition frame 106 through the slot 1062 at the bottom, so as to place the culture tank 50 on the top deck of the hull component 10;
   at the same time, the lifting component 40 is lowered to the lowest vertical position, and all the compartment covers 107 are closed;
(2) deep-sea and far-sea aquaculture stage
   after arriving at the destination, the bolt connection between the first hole 5022 of the lower space 502 and the third hole 5011 of the upper space 501 is released, and the fixed connection between the slot 1062 at the bottom of the culture tank 50 and the partition frame 106 is released;
   by adjusting the longitudinal moving component 20 and the transverse moving component 30, and using the electric hoist 409 of the lifting component 40 to drive the pulling plate 411 at the end of the first steel cable 410 to hook the cable hook 5048 of the culture tank 50 to descend continuously, the outer bosses at the upper part of each upper space 501 are sequentially dropped into the notch 1061 of the partition frame 106 of the hull component 10, then the fourth hole 5016 of the upper space 501 is fixedly connected with the slot 1062 of the hull component 10 by a screw, and the lower space 502 is pulled to the lowest vertical position by its own weight;
   the water level of the compartment 102 is raised to W2 by a water pump, by adjusting the longitudinal moving component 20, the transverse moving component 30 and the lifting component 40, the first steel cable 410 is pulled and driven by the electric hoist 409 to hook the first hook 602 of the first fish driving frame 60, so that the first fish driving frame 60 is continuously lifted vertically to drive the cultured fish to the cabin fish outlets 109, and then the second sealing door 505 is opened, allowing the cultured fish to be directionally transferred to the culture tank 50 through the sorter 1091 and the culture tank fish inlets 5051;
   at the same time, defective cultured fish can also be picked out by the sorter 1091 and moved to other places through the sorting ports 1092; and after the cultured fish transfer operation is completed, the second sealing door 505 is closed, and no cultured fish will be temporarily kept in the compartment 102;
   in the daily culture process of the culture tank 50, the pulling plate 411 at the end of the first steel cable 410 of the electric hoist 409 is driven to hook the hook 703 of the feed bin 70 by adjusting the longitudinal moving component 20, the transverse moving component 30 and the lifting component 40, and the feed bin 70 is moved in the X, Y and Z-axis directions in Fig. 1 until it is vertically above the culture tank 50, and the valve 705 is opened by a control program for directional feeding;
(3) transportation stage from deep-sea and far-sea aquaculture area back to shore base
   Step 1, the water level of the compartment 102 is lowered below W3 by a water pump, the culture tank fish inlets 5051 are closed, the culture tank fish outlets 5052 are opened, and the first sealing door 1081 of the cabin fish inlets 108 is opened at the same time;
      by adjusting the longitudinal moving component 20, the transverse moving component 30 and the lifting component 40, the pulling plate 411 at the end of the first steel cable 410 is driven by the electric hoist 409 to hook the second hook 5062 of the second fish driving frame 506, so that the second fish driving frame 506 is vertically lifted to drive the cultured fish from the culture tank 50 to the compartment 102 via the culture tank fish outlets 5052 and the cabin fish inlets 108; at this point, the water pump continuously pumps water to form a directional water flow from the culture tank 50 to the compartment 102, which is beneficial to the rapid movement of the cultured fish; and transfer of the cultured fish in each culture tank 50 to the designated compartment 102 is completed in turn;
   Step 2, the longitudinal moving component 20 and the transverse moving component 30 are adjusted, a plurality of fourth motors 413 are started above a certain culture tank 50 to drive the lifting screw 414 and the lifting nut 313 to rotate spirally, and then under the joint action of the first telescopic rod 303, the second telescopic rod 304 and the third telescopic rod 305, the entire lifting component 40 is lifted to the highest vertical position; the pulling plate 411 of the first steel cable 410 pulled by the electric hoist 409 of the lifting component 40 is connected with the cable hook 5048 of the culture tank 50, and under the traction of the electric hoist 409, the lower space 502 and the upper space 501 are pulled to be retracted vertically towards each other and compressed to the minimum height;
   Step 3, the culture tank cover 503 is closed, and the fixed connection between the fourth hole 5016 of the upper space 501 and the slot 1062 of the hull component 10 is released; under the traction of the electric hoist 409, the pulling plate 411 continues to pull the cable hook 5048 outward, so that the horizontal limit of the upper space 501 is released; the upper space 501 and the lower space 502 continue to move up vertically, and the culture tank 50 is completely suspended from the water; when the bottom surface of the lower space 502 is higher than the slot 1062 of the partition frame 106, a bolt or other obstacles are inserted, and then the pulling plate 411 pulled by the electric hoist 409 drives the cable hook 5048 to move down, that is, the upper space 501 and the lower space 502 move down vertically as a whole until the lower space 502 falls on the bolt or other obstacles, at which time the culture tank 50 is fixedly connected with the partition frame 106 through steel cables or bolts; finally, the pulling plate 411 is disengaged from the cable hook 5048 to release the culture tank 50, and the culture tank 50 is placed on the top deck of the hull component 10; and according to the above steps, the placement of all the culture tanks 50 is completed in turn;
   Step 4, a bolt penetrates into the first hole 5022 of the lower space 502 and the third hole 5011 of the upper space 501 to secure the lower space and the upper space; at the same time, a plurality of fourth motors 413 are started to drive the lifting screw 414 and the lifting nut 313 to rotate spirally; and under the joint action of the first telescopic rod 303, the second telescopic rod 304 and the third telescopic rod 305, the lifting component 40 is lowered to the lowest vertical position, and all the compartment covers 107 are closed, so that the dual-hull vessel can travel back to the shore base safely with minimum resistance.

In summary, the embodiments given with reference to the attached drawings are only preferred schemes for achieving the purpose of the present invention. According to this, those skilled in the art can get inspiration and directly deduce other alternative structures that conform to the design concept of the invention. Other structural features thus obtained should also fall within the scope of the schemes described in the present invention.

## Claims

1. A deep-sea and far-sea dual-hull vessel aquaculture method, wherein the natural water environment outside a vessel is used to conduct open type fish culture from small fry to adult fish in culture tanks (50);
during the traveling of a dual-hull vessel, cultured fish are temporarily kept within a hull component (10);
feed bins (70) are lifted by a mobile lifting mechanism at the top of a hull component (10), the mobile lifting mechanism is arranged between the tops of the hull components on two sides, and the mobile lifting mechanism comprises a lifting component (40) and a longitudinal moving component (20);
the mobile lifting mechanism is used to lift the culture tanks (50), and the culture tanks (50) are lifted out of the water after contracting vertically;
a plurality of enclosed and isolated compartments (102) are provided in the hull component (10);
**characterized in that**
the mobile lifting mechanism further comprises a transverse moving component (30), wherein the longitudinal moving component (20) and the transverse moving component (30) are distributed along the hulls on two sides, and the longitudinal moving component (20) has an H-shaped frame bottom structure; and the mobile lifting mechanism is used to lift the feed bins (70), and the feed bins (70) dispense feeds to the culture tanks (50) below when traveling along the H-shaped frame of the longitudinal moving component (20);
fish collecting devices are arranged at the bottom of the compartment (102) and the bottom of the culture tanks (50), so as to drive the cultured fish to their respective fish outlets, and the fish collecting device comprises a first fish driving frame (60) and a second fish driving frame (506);
based on transfer channels and water level difference control between hull components (10) on two sides and the culture tanks (50), fish are directionally transferred or unloaded as follows:
in the process of transferring the cultured fish from the culture tanks (50) to the hull component (10), the water level in the compartment (102) is reduced to a preset low water level first by using a water pump, water is continuously pumped outwards, and the second fish driving frame (506) is pulled upwards, so that the cultured fish enter the compartments (102) through culture tank fish outlets (5052) and cabin fish inlets (108); and
in the process of transferring the cultured fish from the hull component (10) to the culture tanks (50), the water level in the compartment (102) is raised to a preset high water level first by using a water pump, water is continuously pumped inward, and the first fish driving frame (60) is pulled upward, so that the cultured fish enter the culture tanks (50) through culture tank fish inlets (5051), cabin fish outlets (109) and a sorter (1091); and
during the traveling of the dual-hull vessel, the culture tanks (50) are placed on a top deck of the hull component (10).

2. The deep-sea and far-sea dual-hull vessel aquaculture method according to claim 1, **characterized in that** in the feeding process as described above, the mobile lifting mechanism located on the top deck of the hull components (10) on two sides lifts the feed bins (70) while traveling along the H-shaped frame, and controls a valve to open to dispense the feeds stored in the feed bins (70) into the culture tanks (50) below.

3. The deep-sea and far-sea dual-hull vessel aquaculture method according to claim 1, **characterized in that** each of the culture tanks (50) is composed of an upper space (501) and a lower space (502) which are linked, the top of the upper space (501) is connected with a culture tank cover (503) and a plurality of movable pulley components, and the bottom of the lower space (502) is provided with the second fish driving frame (506);
an outer side wall of the upper space (501) and an inner side wall of the lower space (502) are in clearance fit, a side wall of the lower space (502) is provided with a first hole (5014), and a side wall of the upper space (501) is provided with a third hole (5011); and
in the process of lifting the culture tanks (50), based on the clearance fit between the upper space (501) and the lower space (502), the upper space (501) and the lower space (502) are retracted towards each other to reduce the volume of the tank until a bottom surface of the upper space (501) contacts an inner bottom surface of the lower space (502); and when the first hole of the lower space (502) is concentric with the third hole of the upper space (501), the whole culture tanks (50) are locked by inserting a bolt between them.

4. The deep-sea and far-sea dual-hull vessel aquaculture method according to claim 1, **characterized in that** during the directional transfer or unloading of the cultured fish, a sorter (1091) is used to connect cabin fish outlets (109) with culture tank fish inlets (5051), and the sorted cultured fish are transferred to different culture tanks (50) through a plurality of sorting ports (1092), or the adult fish are directly unloaded from the dual-hull vessel.

5. The deep-sea and far-sea dual-hull vessel aquaculture method according to claim 1, **characterized in that** the culture tanks (50) are vertically compressed and put away, then detached from the hull component (10), and finally removed by a maintenance boat (80).

6. The deep-sea and far-sea dual-hull vessel aquaculture method according to claim 3, **characterized by** comprising the following stages:
(1) transportation stage from shore base to deep-sea and far-sea aquaculture area
small fry or cultured fish are contained in the compartments (102), the upper space (501) and the lower space (502) of the culture tank (50) are retracted vertically towards each other to the minimum volume, the lower space (502) and the upper space (501) are locked, the culture tanks (50) are stored on the top deck of the hull component (10), and the lifting component (40) is lowered to the lowest vertical position;
(2) deep-sea and far-sea aquaculture stage
a partition frame (106) is arranged between the tops of the hull components (10) on two sides, and the partition frame (106) has a plurality of evenly distributed upward-opening notches (1061);
after reaching the aquaculture area, locking between the lower space (502) and the upper space (501) is released, then by adjusting the longitudinal moving component (20) and the transverse moving component (30), the upper spaces (501) are sequentially lowered onto the partition frame (106) of the hull component (10) using the lifting component (40), the upper space (501) and the hull component (10) are fixedly connected, and the lower space (502) is pulled to the lowest vertical position by its own weight;
the water level of the compartment (102) is raised to a preset high water level through a water pump, then by adjusting the longitudinal moving component (20), the transverse moving component (30) and the lifting component (40), the first fish driving frame (60) is vertically lifted to drive the cultured fish to cabin fish outlets (109), the cultured fish are directionally transferred into the culture tanks (50) through a sorter (1091) and culture tank fish inlets (5051), and no cultured fish are temporarily kept in the compartment (102);
in the daily culture process, by adjusting the longitudinal moving component (20), the transverse moving component (30) and the lifting component (40), the feed bins (70) are moved until they are vertically above the culture tanks (50), and a valve is opened by a control program for directional feeding;
(3) transportation stage from deep-sea and far-sea aquaculture area back to shore base
Step 1, the water level of the compartment (102) is lowered to a preset low water level by a water pump, culture tank fish inlets (5051) are closed, culture tank fish outlets (5052) are opened, and at the same time, cabin fish inlets (108) are opened;
by adjusting the longitudinal moving component (20), the transverse moving component (30) and the lifting component (40), the second fish driving frame (506) is vertically lifted to drive the cultured fish to the compartments (102) from the culture tanks (50) via the culture tank fish outlets (5052) and the cabin fish inlets (108);
Step 2, the longitudinal moving component (20) and the transverse moving component (30) are adjusted, the entire lifting component (40) is lifted to the highest vertical position above a certain culture tank (50), and the lower space (502) and the upper space (501) are pulled to be retracted towards each other and compressed to the minimum height in the vertical direction;
Step 3, the culture tanks (50) are closed, the fixed connection between the upper space (501) and the hull component (10) is released, the horizontal limit of the upper space (501) is removed, and the upper space (501) and the lower space (502) continue to move up vertically, so that the culture tanks (50) are completely suspended from the water surface; the culture tanks (50) are fixedly connected with the partition frame (106), and the culture tanks (50) are placed on the top deck of the hull component (10); and
Step 4, the lower space (502) and the upper space (501) are secured, the lifting component (40) is lowered to the lowest vertical position, all the compartments (102) are closed, and the dual-hull vessel travels back to the shore base.

## Patentansprüche

1. Tiefsee- und Hochseeaquakulturverfahren mit einem Doppelrumpfschiff, wobei die natürliche Wasserumgebung außerhalb des Schiffs dazu verwendet wird, eine offene Fischkultur von kleinen bis hin zu erwachsenen Fischen in Zuchttanks (50) durchzuführen;
wobei während der Fahrt des Doppelrumpfschiffs der Zuchtfisch vorübergehend in einer Rumpfkomponente (10) gehalten wird;
wobei Futterbehälter (70) durch einen mobilen Hebemechanismus an der Oberseite einer Rumpfkomponente (10) angehoben werden, wobei der mobile Hebemechanismus is zwischen den Oberseiten der Rumpfkomponenten zweiter Seiten angeordnet ist und der mobile Hebemechanismus eine Hebekomponente (40) und eine Längsbewegungskomponente (20) umfasst;
wobei der mobile Hebemechanismus dazu verwendet wird, die Zuchttanks (50) anzuheben, und die Zuchttanks (50) nach einer vertikalen Kontraktion aus dem Wasser gehoben werden;
wobei eine Vielzahl von umschlossenen und isolierten Kammern (102) in der Rumpfkomponente (10) bereitgestellt ist;
**dadurch gekennzeichnet, dass**
der mobile Hebemechanismus ferner eine Querbewegungskomponente (30) umfasst, wobei die Längsbewegungskomponente (20) und die Querbewegungskomponente (30) auf zwei Seiten an den Rümpfen verteilt sind und die Längsbewegungskomponente (20) eine H-förmige Rahmenbodenstruktur aufweist; und der mobile Hebemechanismus zum Anheben der Futterbehälter (70) verwendet wird und die Futterbehälter (70) Futter an die Zuchttanks (50) darunter abgeben, wenn sie sich am H-förmigen Rahmen der Längsbewegungskomponente (20) entlang bewegen;
wobei Fischsammelvorrichtungen am Boden der Kammer (102) und am Boden der Zuchttanks (50) angeordnet sind, um den Zuchtfisch zu jeweiligen Fischauslässen zu treiben, wobei die Fischsammelvorrichtung einen ersten Fischtreiberahmen (60) und einen zweiten Fischtreiberahmen (506) umfasst;
wobei der Fisch anhand von Transferkanälen und Wasserpegeldifferenzsteuerung zwischen Rumpfkomponenten (10) zweier Seiten und den Zuchttanks (50) wie folgt gerichtet überführt oder entladen wird:
beim Überführen des Zuchtfischs aus den Zuchttanks (50) in die Rumpfkomponente (10) wird der Wasserpegel in der Kammer (102) zunächst mithilfe einer Wasserpumpe auf einen voreingestellten niedrigen Wasserpegel reduziert, Wasser kontinuierlich abgepumpt und der zweite Fischtreiberahmen (506) aufwärts gezogen, so dass der Zuchtfisch durch Zuchttankfischauslässe (5052) und Kabinenfischeinlässe (108) in die Kammern (102) gelangt; und
beim Überführen des Zuchtfischs aus der Rumpfkomponente (10) in die Zuchttanks (50) wird der Wasserpegel in der Kammer (102) mithilfe einer Wasserpumpe auf einen voreingestellten hohen Wasserpegel angehoben, Wasser kontinuierlich eingepumpt und der erste Fischtreiberahmen (60) aufwärts gezogen, so dass der Zuchtfisch durch Zuchttankfischeinlässe (5051), Kabinenfischauslässe (109) und einen Sortierer (1091) in die Zuchttanks (50) gelangt; und
die Zuchttanks (50) werden während der Fahrt des Doppelrumpfschiffs auf einem Oberdeck der Rumpfkomponente (10) angeordnet.

2. Tiefsee- und Hochseeaquakulturverfahren mit einem Doppelrumpfschiff nach Anspruch 1, **dadurch gekennzeichnet, dass** die mobile Hebemechanismus auf dem Oberdeck der Rumpfkomponenten (10) zweier Seiten während des oben beschriebenen Fütterungsvorgangs die Futterbehälter (70) anhebt, während sie sich am H-förmigen Rahmen entlang bewegt, und ein Ventil öffnend steuert, um das Futter im Futterbehälter (70) an die Zuchttanks (50) darunter abzugeben.

3. Tiefsee- und Hochseeaquakulturverfahren mit einem Doppelrumpfschiff nach Anspruch 1, **dadurch gekennzeichnet, dass** jeder der Zuchttanks (50) aus einem oberen Raum (501) und einem unteren Raum (502) ausgebildet ist, die miteinander verbunden sind, wobei der obere Raum (501) mit einer Zuchttankabdeckung (503) und einer Vielzahl von beweglichen Rollenkomponenten verbunden ist und der Boden des unteren Raums (502) mit dem Fischtreiberahmen (506) versehen ist;
wobei eine äußere Seitenwand des oberen Raums (501) und eine innere Seitenwand des unteren Raums (502) mit Spiel zusammengefügt sind, eine Seitenwand des unteren Raums (502) mit einem ersten Loch (5014) versehen ist und eine Seitenwand des oberen Raum (501) mit einem dritten Loch (5011) versehen ist; und
beim Heben der Zuchttanks (50), da der obere Raum (501) und der untere Raum (502) mit Spiel zusammengefügt sind, der obere Raum (501) und der untere Raum (502) zueinander hin zurückgezogen werden, um das Volumen des Tanks zu reduzieren, bis eine Bodenfläche des oberen Raums (501) mit einer inneren Bodenfläche des unteren Raums (502) in Kontakt gelangt; wobei, wenn das erste Loch des unteren Raums (502) mit dem dritten Loch des oberen Raums (501) konzentrisch ist, die Zuchttanks (50) insgesamt durch Einführen eines Bolzens zwischen ihnen verriegelt werden.

4. Tiefsee- und Hochseeaquakulturverfahren mit einem Doppelrumpfschiff nach Anspruch 1, **dadurch gekennzeichnet, dass** beim gerichteten Überführen oder Entladen des Zuchtfischs ein Sortierer (1091) zum Verbinden der Kabinenfischauslässe (109) mit Zuchttankfischeinlässen (5051) verwendet wird und der sortierte Zuchtfisch durch eine Vielzahl von Sortierungsöffnungen (1092) in unterschiedliche Zuchttanks (50) überführt wird oder die erwachsenen Fische direkt aus dem Doppelrumpfschiff entladen werden.

5. Tiefsee- und Hochseeaquakulturverfahren mit einem Doppelrumpfschiff nach Anspruch 1, **dadurch gekennzeichnet, dass** die Zuchttanks (50) vertikal komprimiert und weggebracht, dann von der Rumpfkomponente (10) gelöst und schließlich von einem Wartungsschiff (80) abtransportiert werden

6. Tiefsee- und Hochseeaquakulturverfahren mit einem Doppelrumpfschiff nach Anspruch 3, **gekennzeichnet durch** folgende Phasen:
(1) Phase des Transports von der Küstenbasis zum Tiefsee- und Hochseeaquakulturbereich:
kleine Fische oder Zuchtfisch werden in Kammern (102) aufgenommen, der obere Raum (501) und der untere Raum (502) des Zuchttanks (50) werden bis zum Mindestvolumen vertikal zueinander hin zurückgezogen, der untere Raum (502) und der obere Raum (501) werden verriegelt, die Zuchttanks (50) werden auf dem Oberdeck der Rumpfkomponente (10) angeordnet und die Hebekomponente (40) wird in die niedrigste vertikale Position abgesenkt;
(2) Tiefsee- und Hochseeaquakulturphase:
ein Teilungsrahmen (106) wird zwischen den Oberseiten der Rumpfkomponenten (10) zweiter Seiten angeordnet, wobei der Teilungsrahmen (106) eine Vielzahl von gleichmäßig verteilten, sich nach oben öffnenden Aussparungen (1061) aufweist;
nach Erreichen des Aquakulturbereichs wird die Verriegelung zwischen dem unteren Raum (502) und dem oberen Raum (501) freigegeben, wodurch die Längsbewegungskomponente (20) und die Querbewegungskomponente (30) verstellt werden, die oberen Räume (501) werden mithilfe der Hebekomponente (40) nacheinander auf den Teilungsrahmen (106) der Rumpfkomponente (10) abgesenkt, der obere Raum (501) und die Rumpfkomponente (10) werden fest verbunden und der untere Raum (502) durch sein Eigengewicht in die niedrigste vertikale Position gezogen;
der Wasserpegel der Kammer (102) wird mittels einer Wasserpumpe auf einen voreingestellten hohen Wasserpegel angehoben, woraufhin durch Verstellen der Längsbewegungskomponente (20), der Querbewegungskomponente (30) und der Hebekomponente (40) der erste Fischtreiberahmen (60) vertikal angehoben wird, um den Zuchtfisch zu Kabinenfischauslässen (109) zu treiben, der Zuchtfisch wird durch einen Sortierer (1091) und Zuchttankfischeinlässe gerichtet in die Zuchttanks (50) überführt (5051) und es wird kein Zuchtfisch vorübergehend in der Kammer (102) gehalten;
im täglichen Zuchtablauf werden durch Verstellen der Längsbewegungskomponente (20), der Querbewegungskomponente (30) und der Hebekomponente (40) die Futterbehälter (70) bewegt, bis sie sich vertikal über den Zuchttanks (50) befinden, und mittels eines Steuerprogramms zum gerichteten Füttern wird ein Ventil geöffnet;
(3) Phase des Transports aus dem Tiefsee- und Hochseeaquakulturbereich zurück an die Küstenbasis:
Schritt 1: der Wasserpegel der Kammer (102) wird mit einer Wasserpumpe auf einen voreingestellten niedrigen Wasserpegel abgesenkt, Zuchttankfischeinlässe (5051) werden geschlossen, Zuchttankfischauslässe (5052) werden geöffnet und zugleich werden Kabinenfischeinlässe (108) geöffnet;
durch Verstellen der Längsbewegungskomponente (20), der Querbewegungskomponente (30) und der Hebekomponente (40) wird der zweite Fischtreiberahmen (506) angehoben, um den Zuchtfisch über die Zuchttankfischauslässe (5052) und die Kabinenfischeinlässe (108) aus den Zuchttanks (50) in die Kammern (102) zu treiben;
Schritt 2: die Längsbewegungskomponente (20) und die Querbewegungskomponente (30) werden verstellt, die gesamte Hebekomponente (40) wird in die höchste vertikale Position über einem bestimmten Zuchttank (50) angehoben und der untere Raum (502) und der obere Raum (501) werden zueinander hin zurückgezogen und auf die Mindesthöhe in vertikaler Richtung komprimiert;
Schritt 3: die Zuchttanks (50) werden geschlossen, die feste Verbindung zwischen dem oberen Raum (501) und der Rumpfkomponente (10) wird freigegeben, die horizontale Begrenzung des oberen Raums (501) wird entfernt und der obere Raum (501) und der untere Raum (502) bewegen sich weiter vertikal aufwärts, so dass die Zuchttanks (50) vollständig über die Wasseroberfläche gehoben werden; die Zuchttanks (50) werden fest mit dem Teilungsrahmen (106) verbunden und die Zuchttanks (50) werden auf dem Oberdeck der Rumpfkomponente (10) angeordnet; und
Schritt 4: der untere Raum (502) und der obere Raum (501) werden befestigt, die Hebekomponente (40) wird in die niedrigste vertikale Position abgesenkt, alle Kammern (102) werden geschlossen und das Doppelrumpfschiff fährt zurück zur Küstenbasis.

## Revendications

1. Procédé d'aquaculture dans un navire à double coque en haute mer et en eaux profondes, dans lequel l'environnement aquatique naturel à l'extérieur d'un navire est utilisé pour mener une culture piscicoles de type ouvert, des alevins aux poissons adultes dans des bassins d'élevage (50) ;
lors du déplacement d'un navire à double coque, les poissons d'élevage sont temporairement conservés à l'intérieur d'un composant de la coque (10) ;
les bacs d'alimentation (70) sont soulevés par un mécanisme de levage mobile au sommet d'un composant de coque (10), le mécanisme de levage mobile est disposé entre les sommets des composants de coque sur deux côtés, et le mécanisme de levage mobile comprend un composant de levage (40) et un composant mobile longitudinal (20) ;
le mécanisme de levage mobile est utilisé pour soulever les bassins d'élevage (50), et les bassins d'élevage (50) sont soulevés hors de l'eau après s'être contractés verticalement ;
une pluralité de compartiments (102) fermés et isolés sont prévus dans l'élément de coque (10) ;
**caractérisé en ce que**
le mécanisme de levage mobile comprend en outre un composant mobile transversal (30), dans lequel le composant mobile longitudinal (20) et le composant mobile transversal (30) sont répartis le long des coques sur deux côtés, et le composant mobile longitudinal (20) a une structure de fond de cadre en forme de H ; et le mécanisme de levage mobile est utilisé pour soulever les cellules d'alimentation (70), et les cellules d'alimentation (70) distribuent les alimentations vers les bassins d'élevage (50) situés en dessous lors du déplacement le long du cadre en forme de H de l'élément mobile longitudinal (20) ;
des dispositifs de collecte de poissons sont disposés au fond du compartiment (102) et au fond des bassins d'élevage (50), de manière à conduire les poissons d'élevage vers leurs sorties de poissons respectives, et le dispositif de collecte de poissons comprend un premier cadre d'entraînement du poisson (60) et un deuxième cadre d'entraînement du poisson (506) ;
sur la base des canaux de transfert et du contrôle des différences de niveau d'eau entre les composants de la coque (10) des deux côtés et les bassins d'élevage (50), les poissons sont transférés ou déchargés de manière directionnelle comme suit :
lors du processus de transfert des poissons d'élevage des bassins d'élevage (50) vers le composant de coque (10), le niveau d'eau dans le compartiment (102) est réduit à un niveau d'eau bas prédéfini d'abord à l'aide d'une pompe à eau, l'eau est pompée en continu vers l'extérieur et le deuxième cadre d'entraînement des poissons (506) est tiré vers le haut, de sorte que les poissons d'élevage entrent dans les compartiments (102) par les sorties de poissons du bassin d'élevage (5052) et les entrées de poissons de cabine (108) ; et
lors du transfert du poisson d'élevage de l'élément de coque (10) vers les bassins d'élevage (50), le niveau d'eau dans le compartiment (102) est d'abord élevé à un niveau d'eau élevé prédéfini à l'aide d'une pompe à eau, l'eau est pompée en continu vers l'intérieur et le premier cadre d'entraînement du poisson (60) est tiré vers le haut, de sorte que les poissons d'élevage entrent dans les bassins d'élevage (50) par les entrées de poissons du bassin d'élevage (5051), des sorties de poissons de cabine (109) et un dispositif de triage (1091) ; et
pendant le déplacement du navire à double coque, les bassins d'élevage (50) sont placés sur un pont supérieur de l'élément de coque (10).

2. Procédé d'aquaculture dans un navire à double coque en haute mer et en eaux profondes selon la revendication 1, **caractérisé en ce que**, dans le processus d'alimentation tel que décrit cidessus, le mécanisme de levage mobile situé sur le pont supérieur des composants de coque (10) sur deux côtés soulève les bacs d'alimentation (70) tout en se déplaçant le long du cadre en forme de H, et commande une vanne en ouverture pour distribuer les aliments stockés dans les bacs d'alimentation (70) dans les bassins d'élevage (50) situés en dessous.

3. Procédé d'aquaculture dans un navire à double coque en haute mer et en eaux profondes selon la revendication 1, **caractérisé en ce que** chacun des bassins d'élevage (50) est composé d'un espace supérieur (501) et d'un espace inférieur (502) qui sont reliés, le haut de l'espace supérieur (501) est relié à un couvercle de bassin d'élevage (503) et à une pluralité de composants de poulie mobile, et le fond de l'espace inférieur (502) est pourvu du deuxième cadre d'entraînement du poisson (506) ;
une paroi latérale extérieure de l'espace supérieur (501) et une paroi latérale intérieure de l'espace inférieur (502) sont ajustés avec jeu, une paroi latérale de l'espace inférieur (502) est pourvue d'un premier trou (5014), et une paroi latérale de l'espace supérieur (501) est pourvue d'un troisième trou (5011) ; et
lors du levage des bassins d'élevage (50), sur la base de l'ajustement du jeu entre l'espace supérieur (501) et l'espace inférieur (502), l'espace supérieur (501) et l'espace inférieur (502) sont rétractés l'un vers l'autre pour réduire le volume du bassin jusqu'à ce qu'une surface inférieure de l'espace supérieur (501) entre en contact avec une surface inférieure intérieure de l'espace inférieur (502) ; et lorsque le premier trou de l'espace inférieur (502) est concentrique avec le troisième trou de l'espace supérieur (501), l'ensemble des bassins d'élevage (50) est verrouillé en insérant un boulon entre eux.

4. Procédé d'aquaculture dans un navire à double coque en haute mer et en eaux profondes selon la revendication 1, **caractérisé en ce que**, lors du transfert directionnel ou du déchargement du poisson d'élevage, un dispositif de triage (1091) est utilisé pour relier les sorties de poissons de cabine (109) aux entrées de poissons du bassin d'élevage (5051), et les poissons d'élevage triés sont transférés dans différents bassins d'élevage (50) par l'intermédiaire d'une pluralité de ports de tri (1092), ou les poissons adultes sont directement déchargés du navire à double coque.

5. Procédé d'aquaculture dans un navire à double coque en haute mer et en eaux profondes selon la revendication 1, **caractérisé en ce que** les bassins d'élevage (50) sont comprimés verticalement et rangés, puis détachés de l'élément de coque (10), et enfin retirés par un navire de maintenance (80).

6. Procédé d'aquaculture dans un navire à double coque en haute mer et en eaux profondes selon la revendication 3, **caractérisé en ce qu'**il comprend les étapes suivantes :
(1) étape de transport de la base côtière à la zone d'aquaculture en haute mer et en eaux profondes ;
des alevins ou des poissons d'élevage sont contenus dans les compartiments (102), l'espace supérieur (501) et l'espace inférieur (502) du bassin d'élevage (50) sont rétractés verticalement l'un vers l'autre jusqu'au volume minimum, l'espace inférieur (502) et l'espace supérieur (501) sont verrouillés, les bassins d'élevage (50) sont stockés sur le pont supérieur de l'élément de coque (10), et l'élément de levage (40) est abaissé à la position verticale la plus basse ;
(2) étape de l'aquaculture en haute mer et en eaux profondes
un cadre de séparation (106) est disposé entre les sommets des composants de coque (10) sur deux côtés, et le cadre de séparation (106) présente une pluralité d'encoches (1061) uniformément réparties vers le haut ;
après avoir atteint la zone d'aquaculture, le verrouillage entre l'espace inférieur (502) et l'espace supérieur (501) est libéré, puis en ajustant l'élément mobile longitudinal (20) et l'élément mobile transversal (30), les espaces supérieurs (501) sont abaissés séquentiellement sur le cadre de séparation (106) de l'élément de coque (10) à l'aide de l'élément de levage (40), l'espace supérieur (501) et l'élément de coque (10) sont reliés de manière fixe, et l'espace inférieur (502) est tiré vers la position verticale la plus basse par son propre poids ;
le niveau d'eau du compartiment (102) est élevé à un niveau d'eau élevé prédéfini par une pompe à eau, puis en ajustant l'élément mobile longitudinal (20), l'élément mobile transversal (30) et l'élément de levage (40), le premier cadre d'entraînement du poisson (60) est soulevé verticalement pour conduire le poisson d'élevage vers les sorties de poisson de cabine (109), les poissons d'élevage sont transférés de manière directionnelle dans les bassins d'élevage (50) à travers un dispositif de triage (1091) et des entrées de poissons du bassin d'élevage (5051), et aucun poisson d'élevage n'est temporairement conservé dans le compartiment (102) ;
dans le processus de culture quotidien, en ajustant l'élément mobile longitudinal (20), l'élément mobile transversal (30) et l'élément de levage (40), les bacs d'alimentation (70) sont déplacés jusqu'à ce qu'ils soient verticalement au-dessus des bassins d'élevage (50), et une vanne est ouverte par un programme de commande pour l'alimentation directionnelle ;
(3) étape de transport de la zone d'aquaculture en haute mer et en eaux profondes jusqu'à la base côtière
Étape 1, le niveau d'eau du compartiment (102) est abaissé à un niveau d'eau bas prédéfini par une pompe à eau, les entrées de poissons du bassin d'élevage (5051) sont fermées, les sorties de poissons du bassin d'élevage (5052) sont ouvertes, et en même temps, les entrées de poissons de cabine (108) sont ouvertes ;
en ajustant l'élément mobile longitudinal (20), l'élément mobile transversal (30) et l'élément de levage (40), le deuxième cadre d'entraînement du poisson (506) est soulevé verticalement pour entraîner le poisson d'élevage vers les compartiments (102) à partir des bassins d'élevage (50) via les sorties de poissons du bassin d'élevage (5052) et les entrées de poissons de cabine (108) ;
Étape 2, l'élément mobile longitudinal (20) et l'élément mobile transversal (30) sont réglés, l'ensemble de l'élément de levage (40) est soulevé à la position verticale la plus élevée au-dessus d'un certain bassin d'élevage (50), et l'espace inférieur (502) et l'espace supérieur (501) sont tirés pour être rétractés l'un vers l'autre et comprimés à la hauteur minimale dans le sens vertical ;
Étape 3, les bassins d'élevage (50) sont fermés, la liaison fixe entre l'espace supérieur (501) et le composant de coque (10) est libérée, la limite horizontale de l'espace supérieur (501) est supprimée, et l'espace supérieur (501) et l'espace inférieur (502) continuent à se déplacer verticalement, de sorte que les bassins d'élevage (50) soient complètement suspendus à la surface de l'eau ; les bassins d'élevage (50) sont reliés de manière fixe au cadre de séparation (106), et les bassins d'élevage (50) sont placés sur le pont supérieur de l'élément de coque (10) ; et
Étape 4, l'espace inférieur (502) et l'espace supérieur (501) sont fixés, l'élément de levage (40) est abaissé à la position verticale la plus basse, tous les compartiments (102) sont fermés et le navire à double coque retourne à la base côtière.
